(19) **Europäisches Patentamt / European Patent Office / Office européen des brevets**

(11) **EP 2 137 588 B1**

(12) **FASCICULE DE BREVET EUROPEEN**

(45) Date de publication et mention
de la délivrance du brevet:
**31.08.2011 Bulletin 2011/35**

(51) Int Cl.:
*G05D 19/02* (2006.01)  *F25B 9/14* (2006.01)
*F16F 15/03* (2006.01)  *H02K 33/00* (2006.01)

(21) Numéro de dépôt: **08761926.8**

(22) Date de dépôt: **11.01.2008**

(86) Numéro de dépôt international:
**PCT/FR2008/050053**

(87) Numéro de publication internationale:
**WO 2008/110704 (18.09.2008 Gazette 2008/38)**

(54) **PROCÉDÉ D'ÉQUILIBRAGE DU MOUVEMENT DES MASSES MOBILES D'UN MOTEUR ÉLECTRODYNAMIQUE BILINÉAIRE**

VERFAHREN ZUM AUSGLEICH DER BEWEGUNG MOBILER MASSEN IN EINEM BILINEAREN ELEKTRODYNAMISCHEN MOTOR

METHOD FOR BALANCING THE MOVEMENT OF MOBILE MASSES IN A BI-LINEAR ELECTRODYNAMIC MOTOR

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **14.03.2007 FR 0753813**

(43) Date de publication de la demande:
**30.12.2009 Bulletin 2009/53**

(73) Titulaire: **L'AIR LIQUIDE, Société Anonyme pour l'Etude
et l'Exploitation des Procédés Georges Claude
75007 Paris (FR)**

(72) Inventeurs:
• **BUQUET, Jonathan
F-38140 La Murette (FR)**
• **AIGOUY, Gérald
F-38290 Crolles (FR)**
• **TROLLIER, Thierry
F-38320 Eybens (FR)**

(74) Mandataire: **De Cuenca, Emmanuel Jaime
L'Air Liquide S.A.
Direction Propriété Intellectuelle
75 Quai d'Orsay
75321 Paris Cedex 07 (FR)**

(56) Documents cités:
**GB-A- 2 318 887    US-A- 5 582 013
US-A- 6 094 912**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé d'équilibrage du mouvement des masses mobiles d'un moteur électrodynamique bilinéaire.

L'invention trouve une application particulièrement avantageuse dans le domaine des machines cryogéniques à cycle alterné, machines Stirling ou tubes à gaz pulsé, mettant en oeuvre des moteurs électrodynamiques bilinéaires à masses mobiles formant pistons, et plus spécialement les machines cryogéniques destinées à être embarquées dans des engins spatiaux tels que les satellites d'observation de la Terre. Dans cette application, les moteurs électrodynamiques bilinéaires jouent le rôle de compresseur du fluide utilisé, de l'hélium par exemple.

Le principe de fonctionnement d'un moteur électrodynamique bilinéaire est basé sur la génération par des bobines d'induction de forces magnétiques cycliques qui viennent animer d'un mouvement rectiligne les masses mobiles aimantées constituant les pistons du moteur, lesquels sont montés sur des paliers mécaniques qui développent du fait de leur construction une force de rappel élastique axiale proportionnelle au déplacement des masses mobiles. Ces dernières sont donc caractérisées par une fréquence de résonance mécanique déterminée par la masse en mouvement, la raideur du palier, la raideur magnétique et la charge fluidique.

Le pilotage du moteur consiste alors à appliquer aux bobines d'induction un courant d'excitation à la fréquence de résonance mécanique des masses mobiles aimantées, de manière à obtenir une amplification naturelle du mouvement de déplacement des pistons.

Dans les compresseurs électrodynamiques bilinéaires, les masses mobiles des pistons sont alignées dans la même chambre de compression et oscillent en opposition mécanique à la fréquence du courant d'excitation des bobines, généralement un courant sinusoïdal. Cet assemblage présente l'avantage d'un équilibrage naturel des masses mobiles en mouvement, ce qui n'est pas le cas des compresseurs linéaires mono-pistons.

Cependant, les tolérances sur les paramètres mécaniques et magnétiques, comme la masse, la rigidité mécanique et magnétique, l'alignement, etc., conduisent à des réponses mécaniques des deux demi-moteurs légèrement différentes pour une consigne électrique identique, et induisent par conséquent des vibrations du moteur dans l'axe de déplacement des masses mobiles des pistons.

Dans une application à l'observation de la Terre par satellite, ce niveau vibratoire résiduel conduit à la dégradation de la prise de vues, ceci d'autant plus que l'environnement mécanique sévère durant le lancement en termes de vibrations et de chocs du lanceur, ainsi que l'environnement thermique en orbite excluant tout transfert thermique par convection, imposent de fixer le compresseur de manière rigide sur la structure du satellite, ce qui favorise la propagation des vibrations générées par le compresseur vers les autres équipements également fixés sur la structure du satellite, notamment les caméras de prise de vues.

De plus, compte tenu des durées de vie demandées, entre 5 et 10 ans, il est nécessaire de suivre l'évolution de l'équilibrage du compresseur afin de garantir un niveau minimal de vibrations induites tout au long du vieillissement.

Les solutions actuelles pour réduire les vibrations résiduelles dues à un défaut d'équilibrage du mouvement des masses mobiles consistent à optimiser la consigne du courant de pilotage d'une des masses mobiles par rapport à l'autre, selon un système maître-esclave.

A cet effet, des capteurs d'effort ou des accéléromètres sont placés en relation mécanique avec le compresseur de manière à fournir une mesure des vibrations induites, sur le compresseur, par un éventuel déséquilibre entre les déplacements des deux pistons. La consigne optimale du courant de pilotage du piston-esclave est obtenue lorsque la mesure de vibrations recueillie par les capteurs d'efforts ou les accéléromètres est minimale.

Les capteurs d'effort sont des rondelles piézo-électriques placées aux interfaces mécaniques de fixation du compresseur avec la structure du satellite. Ce type de capteurs présente cependant un certain nombre d'inconvénients.

Tout d'abord, s'ils sont capables de mesurer les vibrations résiduelles propres au compresseur, les capteurs d'effort peuvent également enregistrer celles provenant d'autres équipements fixés à la même structure mécanique du satellite. La mesure des vibrations recherchées se trouve donc perturbée par l'environnement mécanique du compresseur.

Les capteurs piézo-électriques étant de mauvais conducteurs thermiques, il faut prévoir un chemin thermique différent du chemin mécanique passant par les rondelles pour évacuer les dissipations thermiques du compresseur, à savoir la chaleur de compression du gaz, les pertes par effet Joule, par courant de Foucault, par hystérésis, etc. A titre d'exemple, un chemin thermique ad hoc peut être réalisé par des tresses conductrices placées en court-circuit sur les rondelles piézo-électriques. Il en résulte bien évidemment une intégration complexe et plus coûteuse.

Enfin, il est très difficile d'obtenir une redondance de ces capteurs d'effort, compte tenu de leur implantation mécanique spécifique.

De même, l'utilisation d'accéléromètres disposés sur le compresseur ne conduit pas à des résultats satisfaisants pour les raisons suivantes.

La mesure fournie par les accéléromètres présente généralement un faible rapport signal à bruit du fait des masses importantes sur lesquelles est fixé le compresseur. De plus, la force transmise est reconstituée par interprétation de la mesure d'accélération selon une masse effective, résultante des masses mobiles, difficile à évaluer et donc imprécise.

Comme pour les capteurs d'effort, la mesure d'accélération est perturbée par l'environnement mécanique autour du compresseur, ce qui conduit à la mesure d'accélérations qui ne dépendent pas du compresseur.

En réalité, la mesure d'accélération est bien adaptée à un montage du compresseur en suspension et non à un montage sur une interface rigide par boulonnage.

Cependant, un montage traditionnel en suspension, nécessaire pour une mesure correcte de l'accélération, découple la structure des interfaces et impose donc des conditions difficilement compatibles avec les applications spatiales, comme la création d'un chemin thermique spécifique pour évacuer les dissipations de chaleur et la mise en place d'un mécanisme de blocage de la suspension, puis de déblocage lorsque le compresseur doit supporter des charges mécaniques externes.

Enfin, les accéléromètres et leur conditionnement associé sont coûteux.

Le document GB 2 318 887 A divulgue un procédé de réduction de vibrations d'une machine cryogénique de type Stirling basé sur la mesure directe de vibrations à l'aide d'un capteur de force détectant les vibrations.

Aussi, l'invention a pour but de proposer un procédé d'équilibrage du mouvement des masses mobiles aimantées d'un moteur électrodynamique bilinéaire, qui permettrait la mise en oeuvre du système de pilotage maître-esclave mentionné plus haut, à partir de mesures de déplacement des masses mobiles qui ne seraient pas perturbées par l'environnement mécanique externe au moteur.

Ce but est atteint, conformément à l'invention, du fait que ledit procédé comprend les étapes selon la revendication 1.

Ainsi, on comprend d'abord que le procédé selon l'invention fonctionne sur la base de signaux représentatifs du déplacement des masses mobiles fournis par des capteurs magnétiques, tels que des capteurs à effet Hall placés par exemple sur le carter du moteur, interceptant une densité, variable en fonction de leur déplacement, du flux magnétique généré par les masses mobiles aimantées.

Il en résulte que les mesures de déplacement ainsi obtenues sont indépendantes de l'environnement du moteur, du moins tant qu'aucun autre équipement à proximité du moteur ne fournit une densité de flux magnétique variable.

Par ailleurs, on comprend aussi que le procédé itératif proposé par l'invention consiste à construire un signal d'excitation pour la masse mobile-esclave comme une série de Fourier dont chaque terme minimise l'harmonique correspondante du signal d'erreur, le signal appliqué à la masse mobile-maître étant le signal sinusoïdal d'excitation à la fréquence fondamentale, appliqué à la bobine d'induction associée à cette masse mobile-maître. On obtient dans ces conditions un équilibrage optimal du mouvement des masses mobiles et, par conséquent, une réduction des vibrations résiduelles minimales.

L'invention présente également bien d'autres avantages.

L'équilibrage des masses mobiles peut être effectué à tout moment, notamment pendant la durée de la mission du satellite afin de tenir compte du vieillissement des organes du moteur.

Contrairement aux systèmes de mesure connus à base de capteurs d'effort ou d'accéléromètres, aucune modification ou adaptation particulière ne doit être apportée aux interfaces mécaniques et thermiques du moteur avec son environnement, comme par exemple un compresseur fixé à la structure d'un satellite.

Les signaux représentatifs du mouvement des masses mobiles sont obtenus sans avoir recours à des capteurs intrusifs qui affecteraient le fonctionnement du moteur.

Enfin, il est très facile de réaliser une redondance du système en plaçant plusieurs capteurs magnétiques en divers endroits du carter du moteur, l'emplacement exact des capteurs n'ayant pas d'importance dès l'instant où il sont capables d'intercepter une densité de flux magnétique suffisante pour obtenir un rapport signal à bruit minimal.

La description qui va suivre en regard du dessin annexé, donné à titre d'exemple non limitatif, fera bien comprendre en quoi consiste l'invention et comment elle peut être réalisée.

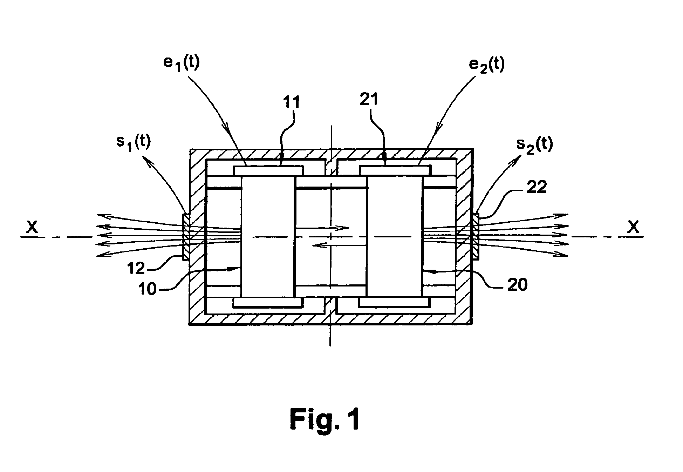

La figure 1 est une vue en coupe d'un compresseur équipé de capteurs magnétiques pour la mise en oeuvre du procédé conforme à l'invention.

Sur la figure 1 est représenté un moteur électrodynamique linéaire destiné par exemple à être intégré en tant que compresseur à une machine cryogénique à cycle alterné du type Stirling, tube à gaz pulsé ou autre, ou des machines cryogéniques à flux continu du type Joule-Thomson. Le moteur de la figure 1 comporte deux masses mobiles 10, 20 formant deux pistons chargés de comprimer un fluide cryogénique, comme de l'hélium.

En fonctionnement, les deux masses mobiles 10, 20 se déplacent en sens contraire parallèlement à l'axe X-X du moteur selon un mouvement alternatif dont la fréquence $f_0$ est choisie sensiblement égale à la fréquence de résonance de l'ensemble électromoteur et de sa charge fluidique. Une valeur typique de cette fréquence de résonance est par exemple de 50 Hz. A cette fréquence, l'amplitude du mouvement des masses mobiles est alors maximale et n'est limitée que par les forces d'amortissement dues aux divers frottements mécaniques, lesquels sont rendus les plus faibles possibles pour une efficacité maximale du moteur.

Par ailleurs, le mouvement alternatif des pistons est obtenu en appliquant à des bobines 11, 21 d'induction un signal d'excitation sinusoïdal à la fréquence $f_0$. Le couplage magnétique des pistons avec les bobines 11, 21 est réalisé au moyen d'aimants permanents portés par les masses mobiles 10, 20.

Comme cela a été mentionné plus haut, en dépit du fait que le moteur bilinéaire de la figure 1 est conçu de manière à ce que le mouvement les masses mobiles soit naturellement équilibré, il peut se produire pour diverses raisons de légers déséquilibres en amplitude et en phase entre les déplacements des masses mobiles 10, 20, avec pour conséquence l'apparition de vibrations résiduelles responsables de dégradations dans la qualité de la prise de vue des caméras du satellite.

Pour limiter ces vibrations induites, il est prévu d'équiper le moteur de capteurs magnétiques 12, 22, capteurs à effet Hall par exemple, aptes à fournir respectivement un premier signal électrique $s_1(t)$ représentatif du mouvement de la masse 10 et un deuxième signal électrique $s_2(t)$ représentatif du mouvement de la masse 20. Ces signaux électriques $s_1(t)$ et $s_2(t)$ ont pour origine la variation de l'induction magnétique à travers les capteurs 12, 22, due à la variation de la densité du flux magnétique créé par les masses aimantées au cours de leur mouvement, comme cela est représenté sur la figure 1 par des lignes de champ magnétique divergentes issues des masses aimantées 10, 20. Au cours du mouvement des masses mobiles, les capteurs interceptent plus ou moins de lignes de champ, d'où la variation de flux magnétique et le courant induit qui en résulte.

Dans l'exemple de la figure 1, les capteurs magnétiques 12, 22 ont été placés sur l'axe longitudinal X-X du moteur. Bien entendu, ils pourraient être placés à un autre endroit sur le carter du moteur, par exemple latéralement, la seule condition étant qu'ils puissent détecter des variations de densité des flux magnétiques créés par les masses mobiles aimantées 10, 20.

Le mouvement des masses mobiles 10, 20 est obtenu en appliquant à la bobine 11 de la première masse mobile 10, que l'on choisira plus tard comme masse-maître, un signal d'excitation $e_1(t)$, et à la bobine 21 de la deuxième masse mobile 20, qui sera choisie comme masse-esclave, un signal d'excitation $e_2(t)$. Ces signaux d'excitation sont périodiques de fréquence $f_0$.

Si les deux demi-moteurs sont parfaitement équilibrés, la différence $\Delta s(t) = s_1(t) - s_2(t)$, que l'on appellera signal d'erreur, est nulle. Cependant, on a vu plus haut qu'en pratique il existe entre les deux mouvements un déséquilibre, source de vibrations résiduelles, que l'invention cherche à corriger au mieux.

Pour cela, le signal d'erreur $\Delta s(t)$ périodique de fréquence $f_0$ est enregistré et soumis à une analyse harmonique de manière à effectuer une décomposition en $N$ composantes de Fourier de fréquence $n.f_0$ avec $0 \leq n \leq N\text{-}1$, $N$ étant un nombre arbitraire donné choisi en fonction du niveau de correction recherché.

On désignera par $C_0,...,C_n,...,C_{N-1}$ l'amplitude respective des composantes de Fourier du signal d'erreur $\Delta s(t)$.

Un signal d'excitation sinusoïdal à la fréquence $f_0$ est appliqué à la masse-maître 10 :

$$e_1(t) = A_1.\sin(2\pi f_0 t)$$

Puis, on effectue une itération du signal d'excitation de la masse-esclave 20 de la manière suivante.

Un premier signal d'excitation de fréquence nulle ($n = 0$)

$$e_2^{\,0}(t) = B_0$$

est appliqué à la masse-esclave 20. Le coefficient $B_0$ est alors ajusté à une valeur optimale $B_0'$ telle que le coefficient correspondant $C_0$ du signal d'erreur soit minimum.

On applique ensuite à la masse-esclave 20 un nouveau signal d'excitation :

$$e_2^{\,1}(t) = B'_0 + B_1.\sin(2\pi f_0 t + \varphi_1)$$

et on ajuste le coefficient $B_1$ et la phase $\varphi_1$ de manière à minimiser le coefficient $C_1$ du signal d'erreur. Soient $B'_1$ et $\varphi'_1$ les valeurs correspondantes.

Au rang d'itération n, on applique à la masse-esclave un signal d'excitation $e_2^n(t)$ donné par :

$$e_2^{\ n}(t) = B'_0 + B'_1 . \sin(2\pi f_0 t + \varphi'_1) + B'_2 . \sin(2\pi(2.f_0)t + \varphi'_2) + ... + B_n . \sin(2\pi(n.f_0)t + \varphi_n)$$

A nouveau, le coefficient $B_n$ et la phase $\varphi_n$ sont ajustés pour minimiser le coefficient $C_n$.

L'itération se poursuit de la sorte jusqu'au dernier rang $n = N$-1.

Finalement, le signal optimal d'excitation de la masse mobile-esclave 20 vaut :

$$e_2(t) = e_2^{\ N-1}(t) = B'_0 + \sum_{n=1}^{N-1} B'_n . \sin(2\pi(n.f_0)t + \varphi'_n)$$

On remarquera que cette procédure peut être effectuée à tout moment, même lorsque le satellite est en vol.

## Revendications

1. Procédé d'équilibrage du mouvement des masses mobiles aimantées (10, 20) d'un moteur électrodynamique bilinéaire comportant deux masses mobiles aimantées (10, 20) se déplaçant en sens contrair parallèlement à l'axe (X-X) du moteur selon un mouvement alternatif animé par les forces magnétiques de bobines (11, 21) d'induction, les masses mobiles aimantées constituant deux pistons alignés dans une même chambre de compression et oscillant en opposition mécanique, ledit procédé comprenant des étapes consistant à :

   - fournir au moins un premier capteur magnétique (12) et au moins un deuxième capteur magnétique (22) aptes à délivrer respectivement un premier signal électrique $(s_1(t))$ et un deuxième signal électrique $(s_2(t))$ respectivement représentatifs du mouvement de la première (10) et de la deuxième (20) masse mobile aimantée,
   - enregistrer un signal d'erreur $(\Delta s(t))$ égal à la différence entre lesdits premier $(s_1(t))$ et deuxième $(s_2(t))$ signaux électriques et effectuer une analyse harmonique dudit signal d'erreur,
   - appliquer à la bobine (11) de la première masse mobile aimantée (10) un signal d'excitation sinusoïdal $(e_1(t))$ à une fréquence $f_0$ donnée,
   - appliquer itérativement à la bobine (21) de la deuxième masse mobile aimantée $N$ signaux d'excitation successifs $(e_2^{\ n}(t))$, un signal d'excitation de rang $n$ ($0 \le n \le N$-1) étant égal à une série de Fourier d'ordre $n$ de fréquence fondamentale $f_0$, le terme d'ordre $n$ de ladite série étant ajusté en amplitude et en phase de sorte à minimiser la composante à la fréquence $n. f_0$ dudit signal d'erreur,
   - prendre pour signal d'excitation de la bobine (21) de la deuxième masse mobile aimantée le signal d'excitation $(e_2^{\ N-1}(t))$ obtenu à l'itération de rang $N$-1.

2. Procédé selon la revendication 1, dans lequel lesdits capteurs magnétiques (12, 22) sont des capteurs à effet Hall.

3. Procédé selon la revendication 1 ou 2, dans lequel les deux masses mobiles aimantées (10, 20) forment deux pistons chargés de comprimer un fluide cryogénique et se déplacent en sens contraire parallèlement à l'axe (X-X) du moteur selon un mouvement alternatif dont la fréquence $f_0$ est choisie égale à la fréquence de résonance de l'ensemble moteur.

4. Procédé selon l'une quelconque des revendications 1 à 3, dans lequel le mouvement alternatif des pistons est obtenu en appliquant à des bobines (11, 21) d'induction un signal d'excitation sinusoïdal à une fréquence $f_0$, le couplage magnétique des pistons avec les bobines (11, 21) étant réalisé au moyen d'aimants permanents portés par les masses mobiles aimantées (10, 20).

5. Procédé selon la revendication 3, dans lequel on applique à la bobine (11) de la première masse mobile aimantée (10), dite « masse-maître », un signal d'excitation $e_1(t)$, et à la bobine (21) de la deuxième masse mobile aimantée (20), dite « masse-esclave », un signal d'excitation $e_2(t)$, ces signaux d'excitation étant périodiques de fréquence $f_0$, le signal d'erreur $\Delta s(t) = s_1(t) - s_2(t)$ périodique de fréquence $f_0$ étant enregistré et soumis à une analyse harmonique de manière à effectuer une décomposition en $N$ composantes de Fourier de fréquence $n.f_0$ avec $0 \le n \le N$-1, $C_0,...,C_n,...,C_{N-1}$ étant l'amplitude respective des composantes de Fourier du signal d'erreur $\Delta s(t)$, on applique un signal d'excitation sinusoïdal à la fréquence $f_0$ à la masse-maître (10) :

$$e_1(t) = A_1 . \sin(2\pi f_0 t)$$

puis, on effectue une itération du signal d'excitation de la masse-esclave (20) de la manière suivante :

un premier signal d'excitation de fréquence nulle ( $n = 0$ )

$$e_2^{\,0}(t) = B_0$$

est appliqué à la masse-esclave (20), le coefficient $B_0$ est alors ajusté à une valeur optimale $B_0'$ telle que le coefficient correspondant $C_0$ du signal d'erreur soit minimum, on applique ensuite à la masse-esclave (20) un nouveau signal d'excitation :

$$e_2^{\,1}(t) = B'_0 + B_1 . \sin(2\pi f_0 t + \varphi_1)$$

et on ajuste le coefficient $B_1$ et la phase $\varphi_1$ de manière à minimiser le coefficient $C_1$ du signal d'erreur, $B'_1$ et $\varphi'_1$ étant les valeurs correspondantes, au rang d'itération n, on applique à la masse-esclave (20) un signal d'excitation $e_2^{\,n}(t)$ donné par :

$$e_2^{\,n}(t) = B'_0 + B'_1 . \sin(2\pi f_0 t + \varphi'_1) + B'_2 . \sin(2\pi(2.f_0)t + \varphi'_2) + ... + B_n . \sin(2\pi(n.f_0)t + \varphi_n)$$

puis à nouveau, le coefficient $B_n$ et la phase $\varphi_n$ sont ajustés pour minimiser le coefficient $C_n$, l'itération se poursuit de la sorte jusqu'au dernier rang $n=N$-1, le signal optimal d'excitation de la masse mobile-esclave (20) vaut au final:

$$e_2(t) = e_2^{\,N-1}(t) = B'_0 + \sum_{n=1}^{N-1} B'_n . \sin(2\pi(n.f_0)t + \varphi'_n)$$

6. Application du procédé selon l'une des revendications 1 à 5 à la réduction des vibrations des moteurs électrodynamiques bilinéaires.

## Claims

1. Method for balancing the motion of the magnetized movable masses (10, 20) of a bilinear electrodynamic motor comprising two magnetized movable masses (10, 20) moving in opposite senses parallel to the axis (X-X) of the motor according to a reciprocating motion driven by the magnetic forces of induction coils (11,21), the magnetized movable masses constituting two pistons aligned in one and the same compression chamber and oscillating in mechanical opposition, the said method comprising steps consisting in:

   - providing at least one first magnetic sensor (12) and at least one second magnetic sensor (22) which are able to deliver respectively a first electrical signal ($s_1(t)$) and a second electrical signal ($s_2(t)$) respectively representative of the motion of the first (10) and of the second (20) magnetized movable mass,
   - recording an error signal ($\Delta s(t)$) equal to the difference between the said first ($s_1(t)$) and second ($s_2(t)$) electrical signals and performing a harmonic analysis of the said error signal,
   - applying a sinusoidal excitation signal ($e_1(t)$) at a given frequency $f_0$ to the coil (11) of the first magnetized movable mass (10),
- iteratively applying $N$ successive excitation signals ($e_2^n(t)$) to the coil (21) of the second magnetized movable mass, an excitation signal of rank $n$ ($0 \leq n \leq N$-1) being equal to a Fourier series of order $n$ of fundamental frequency $f_0$, the term of order $n$ of the said series being adjusted in amplitude and in phase so as to minimize the component at the frequency $n.f_0$ of the said error signal,
- taking the excitation signal ($e_2^{N-1}(t)$) obtained at the iteration of rank $N$-1 as excitation signal for the coil (21) of the second magnetized movable mass.

2.  Method according to Claim 1, in which the said magnetic sensors (12, 22) are Hall-effect sensors.

3.  Method according to Claim 1 or 2, in which the two magnetized movable masses (10, 20) form two pistons tasked with compressing a cryogenic fluid and move in opposite senses parallel to the axis (X-X) of the motor according to a reciprocating motion whose frequency $f_0$ is chosen equal to the resonant frequency of the motor assembly.

4.  Method according to any one of Claims 1 to 3, in which the reciprocating motion of the pistons is obtained by applying a sinusoidal excitation signal at a frequency $f_0$ to induction coils (11, 21), the magnetic coupling of the pistons with the coils (11, 21) being achieved by means of permanent magnets carried by the magnetized movable masses (10, 20).

5.  Method according to Claim 3, in which an excitation signal $e_1(t)$ is applied to the coil (11) of the first magnetized movable mass (10), termed the "master-mass", and an excitation signal $e_2(t)$ is applied to the coil (21) of the second magnetized movable mass (20), termed the "slave-mass", these excitation signals being periodic of frequency $f_0$, the periodic error signal $\Delta s(t) = s_1(t) - s_2(t)$ of frequency $f_0$ being recorded and subjected to a harmonic analysis so as to perform a decomposition into N Fourier components of frequency $n.f_0$ with $0 \leq n \leq N$-1, $C_0$,..., $C_n$,..., $C_{N-1}$ being the respective amplitude of the Fourier components of the error signal $\Delta s(t)$, a sinusoidal excitation signal at the frequency $f_0$ is applied to the master-mass (10):

$$e_1(t) = A_1 .\sin(2\pi f_0 t)$$

then an iteration of the excitation signal for the slave-mass (20) is performed in the following manner:

a first excitation signal of zero frequency ($n$=0)

$$e_2^{\,0}(t) = B_0$$

is applied to the slave-mass (20), the coefficient $B_0$ is then adjusted to an optimal value $B_0$' such that the corresponding coefficient $C_0$ of the error signal is at a minimum, a new excitation signal:

$$e_2^{\,1}(t) = B'_0 + B_1.\sin(2\pi f_0 t + \varphi_1)$$

is thereafter applied to the slave-mass (20) and the coefficient $B_1$ and the *phase* $\varphi_1$ are adjusted so as to minimize the coefficient $C_1$ of the error signal, $B'_1$ and $\varphi'_1$ being the corresponding values, at iteration rank n, an excitation signal $e_2^n(t)$ given by:

$$e_2^{\,n}(t) = B'_0 + B'_1.\sin(2\pi f_0 t + \varphi'_1) + B'_2.\sin(2\pi(2.f_0)t + \varphi'_2) + ... + B_n.\sin(2\pi(n.f_0)t + \varphi_n)$$

is applied to the slave-mass (20)
then again, the coefficient $B_n$ and the phase $\varphi_n$ are adjusted so as to minimize the coefficient $C_n$, the iteration continues thus up to the last rank $n$=$N$-1, the optimal excitation signal for the slave movable mass (20) ultimately equals:

$$e_2(t) = e_2^{N-1}(t) = B'_0 + \sum_{n=1}^{N-1} B'_n . \sin(2\pi(n.f_0)t + \varphi'_n)$$

6. Application of the method according to one of Claims 1 to 5 to reducing the, vibrations of bilinear electrodynamic motors.

**Patentansprüche**

1. Verfahren zum Ausgleich der Bewegung der magnetisierten beweglichen Massen (10, 20) eines bilinearen elektrodynamischen Motors, der zwei magnetisierte bewegliche Massen (10, 20) aufweist, die sich in Gegenrichtung parallel zur Achse (X-X) des Motors in einer Hin- und Herbewegung verschieben, die von den Magnetkräften von Induktionsspulen (11, 21) angeregt wird, wobei die magnetisierten beweglichen Massen zwei Kolben bilden, die in der gleichen Druckkammer fluchtend ausgerichtet sind und mechanisch entgegengesetzt schwingen, wobei das Verfahren Schritte enthält, die darin bestehen:

   - mindestens eine ersten Magnetsensor (12) und mindestens einen zweiten Magnetsensor (22) bereitzustellen, die ein erstes elektrischen Signal ($s_1(t)$) bzw. ein zweites elektrisches Signal ($S_2(t)$) liefern können, die für die Bewegung der ersten (10) bzw. der zweiten (20) magnetisierten beweglichen Masse repräsentativ sind,
   - ein Fehlersignal ($\Delta s(t)$) gleich der Differenz zwischen dem ersten ($s_1(t)$) und dem zweiten ($s_2(t)$) elektrischen Signal zu speichern und eine harmonische Analyse des Fehlersignals durchzuführen,
   - an die Spule (11) der ersten magnetisierten beweglichen Masse (10) ein sinusförmiges Anregungssignal ($e_1(t)$) mit einer gegebenen Frequenz $f_0$ anzulegen,
   - iterativ an die Spule (21) der zweiten magnetisierten beweglichen Masse N aufeinanderfolgende Anregungssignale ($e_2^n(t)$) anzulegen, wobei ein Anregungssignal des Rangs n ($0 \le n \le N-1$) gleich einer Fourier-Reihe der Größenordnung n mit einer Grundfrequenz $f_0$ ist, wobei das Glied der Größenordnung n der Reihe amplituden- und phasenjustiert wird, um die Komponente mit der Frequenz n. $f_0$ des Anregungssignals zu minimieren,
   - als Anregungssignal der Spule (21) der zweiten magnetisierten beweglichen Masse das Anregungssignal ($e_2^{N-1}(t)$) zu nehmen, das bei der Iteration des Rangs N-1 erhalten wird.

2. Verfahren nach Anspruch 1, bei dem die Magnetsensoren (12, 22) Hall-Sensoren sind.

3. Verfahren nach Anspruch 1 oder 2, bei dem die zwei magnetisierten beweglichen Massen (10, 20) zwei Kolben bilden, die die Aufgabe haben, ein kryogenes Fluid zu komprimieren, und sich in Gegenrichtung parallel zur Achse (X-X) des Motors gemäß einer Hin- und Herbewegung verschieben, deren Frequenz $f_0$ gleich der Resonanzfrequenz der Motoreinheit gewählt wird.

4. Verfahren nach einem der Ansprüche 1 bis 3, bei dem die Hin- und Herbewegung der Kolben durch Anlegen eines sinusförmigen Anregungssignals mit der Frequenz $f_0$ an Induktionsspulen (11, 21) erhalten wird, wobei die magnetische Kopplung der Kolben mit den Spulen (11, 21) mit Hilfe von Dauermagneten hergestellt wird, die von den magnetisierten beweglichen Massen (10, 20) getragen werden.

5. Verfahren nach Anspruch 3, bei dem an die Spule (11) der ersten magnetisierten beweglichen Masse (10), "Master-Masse" genannt, ein Anregungssignal $e_1(t)$, und an die Spule (21) der zweiten magnetisierten beweglichen Masse (20), "Slave-Masse" genannt, ein Anregungssignal $e_2(t)$ angelegt wird, wobei diese Anregungssignale periodisch mit der Frequenz $f_0$ sind, wobei das periodische Fehlersignal $\Delta s(t) = s_1(t) - s_2(t)$ mit der Frequenz $f_0$ gespeichert und einer harmonischen Analyse unterzogen wird, um eine Zerlegung in N Fourier-Komponenten der Frequenz n. $f_0$ mit $0 \le n \le N-1$ durchzuführen, wobei $C_0$, ..., $C_n$, ..., $C_{N-1}$ die jeweilige Amplitude der Fourier-Komponenten des Fehlersignals $\Delta s(t)$ ist, an die Master-Masse (10) ein sinusförmiges Anregungssignal mit der Frequenz $f_0$ angelegt wird:

$$\texttt{e}_1\texttt{(t)} \ = \ \texttt{A}_1\texttt{.sin(}2\pi f_0\texttt{t)}$$

dann eine Iteration des Anregungssignals der Slave-Masse (20) folgendermaßen durchgeführt wird:

ein erstes Anregungssignal mit der Frequenz Null (n = 0)

$$e_2{}^0(t) \;=\; B_0$$

wird an die Slave-Masse (20) angelegt, der Koeffizient $B_0$ wird dann auf einen derartigen optimalen Wert $B_0$' justiert, dass der entsprechende Koeffizient $C_0$ des Fehlersignals minimal ist, dann wird an die Slave-Masse (20) ein neues Anregungssignal angelegt:

$$e_2{}^1(t) \;=\; B'_0 \;+\; B_1 . \sin(2\pi f_0 t \;+\; \varphi_1)$$

und der Koeffizient $B_1$ und die Phase $\varphi_1$ werden so justiert, dass der Koeffizient $C_1$ des Fehlersignals minimiert wird, wobei $B'_1$ und $\varphi'_1$ die entsprechenden Werte im Iterationsrang n sind, an die Slave-Masse (20) wird ein Anregungssignal $e_2{}^n(t)$ angelegt, das angegeben wird durch:

$$e_2{}^n(t) = B'_0 + B'_1 . \sin(2\pi f_0 t + \varphi'_1) + B'_2 . \sin(2\pi(2.f_0)t + \varphi'_2) +$$
$$\ldots + B_n . \sin(2\pi(n.f_0)t + \varphi_n)$$

dann werden der Koeffizient $B_n$ und die Phase $\varphi_n$ erneut justiert, um den Koeffizient $C_n$ zu minimieren, wobei die Iteration so bis zum letzten Rang n = N-1 fortgesetzt wird, wobei das optimale Anregungssignal der beweglichen Slave-Masse (20) schließlich den folgenden Wert hat:

$$e_2(t) = e_2{}^{N-1}(t) \;=\; B'_0 \;+\; \sum_{n=1}^{N-1} B'_n . \sin(2\pi(n.f_0)t + \varphi'_n)$$

6. Anwendung des Verfahrens nach einem der Ansprüche 1 bis 5 an die Reduzierung der Schwingungen der bilinearen elektrodynamischen Motoren.

**Fig. 1**

**EP 2 137 588 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2318887 A